# EUROPÄISCHE PATENTSCHRIFT

(11) **EP 2 734 765 B1**
(45) Veröffentlichungstag und Bekanntmachung des Hinweises auf die Patenterteilung: **02.03.2016**
(21) Anmeldenummer: 12746273.7
(22) Anmeldetag: 13.07.2012
(51) Int. Cl.: F24F 13/02, F16L 23/036

(54) **FLANSCHKLAMMER**
FLANGE CHAMBER
ÉTRIER DE BRIDES

(30) Priorität: 21.07.2011 DE 202011103541 U
(43) Veröffentlichungstag der Anmeldung: 28.05.2014
(73) Patentinhaber: Hermanussen Metallverarbeitung GmbH, 59457 Werl (DE)
(72) Erfinder: DRAVENAU, Paul, 10119 Berlin (DE); LEHMANN, Jörg, 59457 Werl (DE); TENNER, Martin, 59457 Werl (DE)
(74) Vertreter: Isfort, Olaf
(86) Internationale Anmeldenummer: PCT/EP2012/002946
(87) Internationale Veröffentlichungsnummer: WO 2013/010655

(56) Entgegenhaltungen:
- WO-A1-2010/094055
- US-A- 5 462 264
- US-A- 5 568 916

## Beschreibung

Die Erfindung betrifft eine Vorrichtung zum Gegeneinanderpressen von zwei aneinander anliegenden Flanschen einer Flanschverbindung zwischen zwei stirnseitig miteinander verbundenen Luftkanalabschnitten.

Eine solche Vorrichtung ist beispielsweise aus DE 103 24 160 B4 oder US 5 462 264 bekannt.

Aufgabe der Erfindung ist es, eine neuartige Vorrichtung bereitzustellen, welche der Schaffung eines Luftkanals mit hoher Dichtigkeit dient, einfach und reversibel an einer Flanschverbindung eines Luftkanals angeordnet werden kann und kostengünstig herstellbar ist.

Diese Aufgabe wird bei einer Vorrichtung der eingangs genannten Art erfindungsgemäß dadurch gelöst, dass diese ein im Querschnitt im Wesentlichen U-förmig ausgebildetes Profil mit einem zwei Profilschenkel verbindenden Steg aufweist, wobei endseitig an jedem Profilschenkel ein Pressabschnitt angeordnet ist, und wobei an einem der beiden Pressabschnitte wenigstens eine Schraube angeordnet ist, deren Außengewinde mit einem an diesem Pressabschnitt angeordneten Innengewinde derart zusammenwirkt, dass sie durch eine Drehung um ihre Längsachse in Richtung des anderen Pressabschnitts bewegbar ist.

Mit der erfindungsgemäßen Vorrichtung lassen sich die Flansche einer Flanschverbindung zwischen zwei stirnseitig miteinander verbundenen Luftkanalabschnitten zur Schaffung eines Luftkanals hoher Dichtigkeit gegeneinanderpressen. Durch die erfindungsgemäße Anordnung der Schraube an einem der beiden Pressabschnitte ist es auf einfache Art und Weise möglich, die Vorrichtung an einer Flanschverbindung eines Luftkanals zu montieren. Diese Montage ist aufgrund der einfachen Bedienbarkeit des über die Schraube betätigbaren Pressmechanismus der Vorrichtung reversibel, so dass die erfindungsgemäße Vorrichtung auch auf einfache Art und Weise von einer Flanschverbindung eines Luftkanals demontiert werden kann. Durch die erfindungsgemäße Anordnung der Schraube kann zudem der Pressdruck, mit dem die aneinander anliegenden Flansche der Flanschverbindung gegeneinander gepresst werden, sehr exakt eingestellt werden. Die erfindungsgemäße Vorrichtung lässt sich zudem unter geringem Kostenaufwand herstellen. Dieses ist insbesondere der Fall, wenn das Profil aus Metall besteht und durch einfaches Biegen eines Blechs in die U-Form gebracht wird. Anschließend ist es lediglich erforderlich, in den die Schraube haltenden Pressabschnitt ein Innengewinde entsprechend dem Außengewinde der Schraube einzubringen. Diese Bearbeitungsmaßnahmen sind nicht aufwendig und damit kostengünstig.

Zur Montage der erfindungsgemäßen Vorrichtung an einer Flanschverbindung eines Luftkanals wird zunächst die Schraube aus dem sie haltenden Pressabschnitt weitestgehend herausgeschraubt oder gar entfernt, wonach das U-förmig ausgebildete Profil über einen Abschnitt von aneinander anliegenden Flanschen gestülpt werden kann. Anschließend wird die Schraube derart betätigt, dass sie sich durch ihre Drehung um ihre Längsachse in Richtung des anderen Pressabschnitts bewegt und somit die Flansche der Flanschverbindung auf gewünschte Art und Weise gegeneinanderpresst.

Das Profil der erfindungsgemäßen Vorrichtung kann beispielsweise aus Metall oder einem anderen formstabilen Werkstoff hergestellt sein. Dass dieses Profil im Wesentlichen U-förmig ausgebildet ist, soll bedeuten, dass im Rahmen der Erfindung nicht eine ideale U-förmige Ausgestaltung des Profils sinnvoll ist, sondern dass geringfügig von der idealen U-Form abweichende Ausgestaltungen des Profils möglich sind.

Gemäß einer vorteilhaften Ausgestaltung der Erfindung ist an dem dem anderen Pressabschnitt zugewandten Ende der Schraube ein Presskörper derart angeordnet, dass er sich relativ zu der Schraube um deren Längsachse drehen kann. Hierdurch kommt das dem Schraubenkopf abgewandte Ende des das Außengewinde tragenden Schraubenschaftes nicht in unmittelbaren Kontakt mit einem Flansch der Flanschverbindung, sondern es ist zwischen diesem Ende und der Flanschverbindung der Presskörper vorhanden. Hierdurch wird verhindert, dass dieser Flansch durch Kontakt mit dem Ende des Schraubenschaftes bei dessen Drehung beschädigt wird. Da sich der Presskörper relativ zu der Schraube um deren Längsachse drehen kann, sind beim Festlegen der Vorrichtung an einer Flanschverbindung eines Luftkanals keine reibenden Kontakte zwischen der Flanschverbindung und der Vorrichtung gegeben, welche die Flanschverbindung und deren Eigenschaften negativ beeinflussen könnten. Der Presskörper kann beispielsweise aus Metall, Kunststoff oder einem anderen geeigneten Material gebildet sein.

Eine weitere vorteilhafte Ausgestaltung der Erfindung sieht vor, dass der Pressabschnitt, welcher nicht die Schraube hält, bzgl. des Profils als nach innen umgeformte Abwinklung oder Abkröpfung ausgebildet ist. Auch diese Ausgestaltung der Erfindung dient der Schaffung einer auf einfache Weise und damit kostengünstig herstellbaren Vorrichtung. Diese Ausgestaltung ist insbesondere bei einem Profil aus Metallblech von Vorteil, da das Profil auf einfache Weise durch mehrere Biegevorgänge aus einem ebenen Metallstück herstellbar ist. Erfindungsgemäß ist der Profilschenkel zweifach gekröpft und zwar mit gegensätzlicher Kröpfrichtung (ausgehend von dem verbindenden Steg zunächst nach innen und dann nach außen), so dass der Pressabschnitt parallel zu dem gegenüberliegenden Pressabschnitt, der die Schraube hält, verläuft. Durch diese Ausgestaltung ergibt sich eine vorteilhafte Federwirkung, die die Anpresskraft limitiert. Dabei betragen die Kröpfwinkel vorzugsweise weniger als 90°. Besonders bevorzugt liegen die entgegengesetzt gleichen Kröpfwinkel im Bereich zwischen 45° und 60°.

Nach einer weiteren vorteilhaften Ausgestaltung der Erfindung ist die Vorrichtung derart ausgebildet, dass sie die Flansche in einem mittleren Bereich der Flansche berührt. Die Ausübung der Presskräfte in dem mittleren Bereich der Flansche auf dieselben ermöglicht die Schaffung einer Flanschverbindung mit höchster Dichtigkeit, da die Flansche in diesem Bereich ihre höchste Verformbarkeit aufweisen.

Die Erfindung betrifft weiterhin einen Luftkanal mit zwei oder mehr über Flanschverbindungen miteinander verbundenen Luftkanalabschnitten, wobei die Flanschverbindungen jeweils zwei aneinander anliegende Flansche aufweisen. Weiterhin weist der Luftkanal wenigstens eine Vorrichtung zum Gegeneinanderpressen der zwei aneinander anliegenden Flansche auf, wobei diese Vorrichtung wie oben erläutert ausgebildet ist.

Bei einer bevorzugten Ausgestaltung befindet sich wenigstens ein Dichtungselement zwischen den aneinander anliegenden Flanschen. Auf diese Weise kann ein besonders dichter Luftkanal bereitgestellt werden. Die erfindungsgemäße Vorrichtung zum Gegeneinanderpressen der zwei aneinander anliegenden Flansche sorgt für ein flächiges und dichtes Anliegen der Flansche an dem Dichtungselement.

Die Erfindung wird im Folgenden anhand der in den beiliegenden Figuren gezeigten Ausführungsbeispiele näher erläutert. Dabei zeigen
Figur 1: eine Stirnansicht eines Ausführungsbeispieles einer nicht erfindungsgemäßen Vorrichtung,
Figur 2: eine Seitenansicht eines Ausführungsbeispiels für die Vorrichtung und
Figur 3: eine Stirnansicht eines Ausführungsbeispiels der erfindungsgemäßen Vorrichtung.

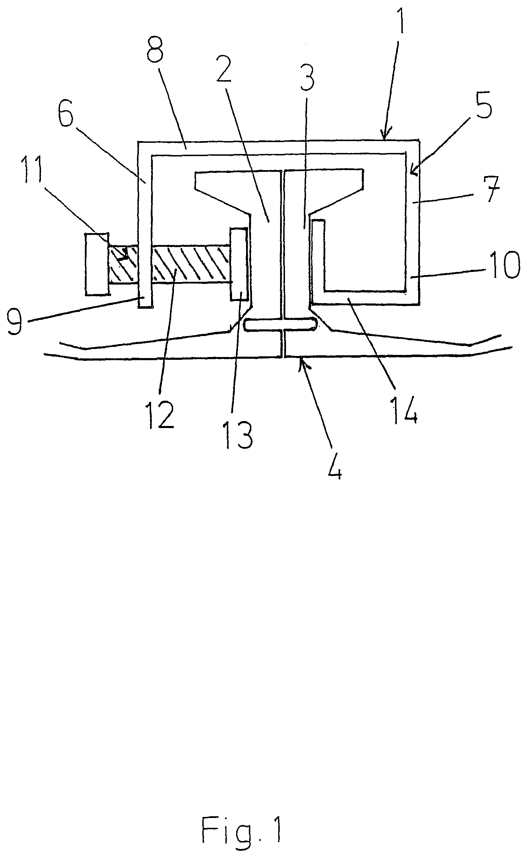

Figur 1 zeigt ein Ausführungsbeispiel für die nicht erfindungsgemäße Vorrichtung 1 zum Gegeneinanderpressen von zwei aneinander anliegenden Flanschen 2 und 3 einer Flanschverbindung 4 zwischen zwei stirnseitig miteinander verbundenen, nicht näher dargestellten Luftkanalabschnitten eines Luftkanals. Die Vorrichtung 1 umfasst ein im Querschnitt im Wesentlichen U-förmig ausgebildetes Profil 5 mit einem zwei Profilschenkel 6 und 7 miteinander verbindenden Steg 8. An jedem Profilschenkel 6 beziehungsweise 7 ist endseitig ein Pressabschnitt 9 beziehungsweise 10 angeordnet. An dem links dargestellten Pressabschnitt 9 ist eine Schraube 11 angeordnet, deren am Schraubenschaft 12 angeordnetes Außengewinde mit einem an diesem Pressabschnitt 9 angeordneten Innengewinde derart zusammenwirkt, dass die Schraube 11 durch eine Drehung um ihre Längsachse L in Richtung des anderen Pressabschnitts 10 bewegbar ist. An dem dem Pressabschnitt 10 zugewandten Ende der Schraube 11 ist ein Presskörper 13 derart angeordnet, dass er sich relativ zu der Schraube 11 um deren Längsachse L drehen kann. An dem anderen Pressabschnitt 10 ist eine bezüglich des Profils 5 nach innen umgeformte Pressabwinklung 14 angeordnet, die durch zweifaches Abwinkeln von Material am Pressabschnitt 10 des Profils 5 ausgebildet ist. Wie Figur 1 zeigt, ist die Vorrichtung 1 derart ausgebildet, dass sie die Flansche 2 und 3 in einem mittleren Bereich der Flansche 2 und 3 berührt. Diese Flansche 2 und 3 werden auf bekannte Art und Weise auf die stirnseitigen Enden von Luftkanalabschnitten aufgeschoben.

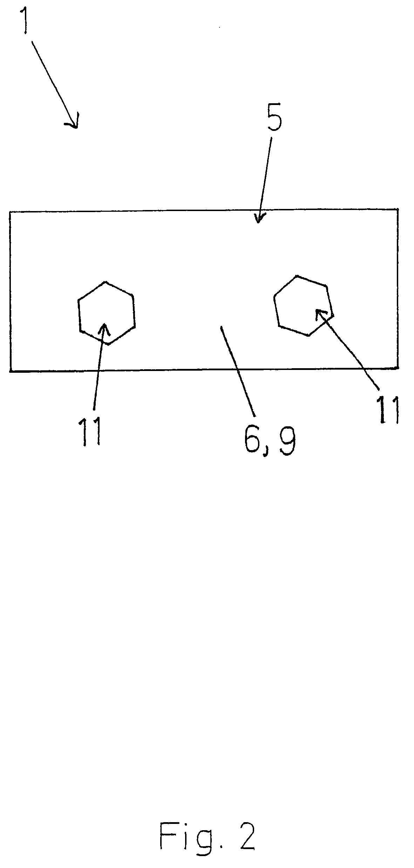

Figur 2 zeigt eine Seitenansicht eines Ausführungsbeispiels für die Vorrichtung. 1. Diese Darstellung entspricht einer Ansicht der Vorrichtung 1 gemäß Figur 1 von links. Es ist der Profilschenkel 6 des Profils 5 zu sehen, an dessen Pressabschnitt 9 zwei Schrauben 11 drehbar gelagert sind, von denen jeweils nur der sechskantförmig ausgebildete Kopf zu sehen ist.

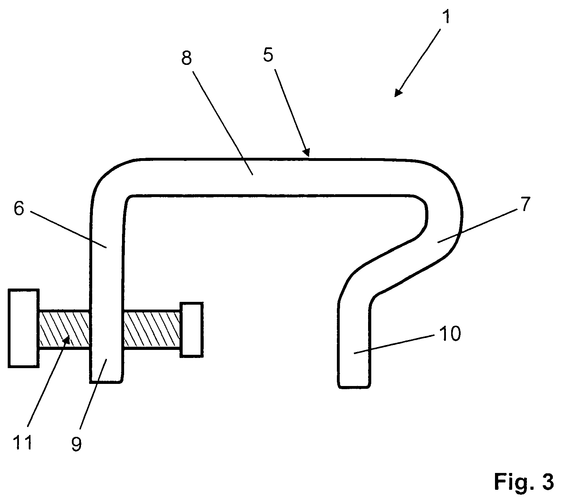

Bei dem in Figur 3 gezeigten Ausführungsbeispiel ist der Pressabschnitt 10, der nicht die Schraube 11 hält, bzgl. des Profils 5 als nach innen umgeformte Abkröpfung ausgebildet ist. Dabei ist der Profilschenkel 7 zweifach gekröpft, und zwar mit gegensätzlicher Kröpfrichtung (ausgehend von dem verbindenden Steg 8 zunächst nach innen und dann nach außen), so dass der Pressabschnitt 10 parallel zu dem gegenüberliegenden Pressabschnitt 9, der die Schraube 11 hält, verläuft. Dabei betragen die gegensätzlich gleichen Kröpfwinkel ca. 45°. Durch diese Ausgestaltung ergibt sich eine vorteilhafte Federwirkung. Beim Ausüben einer Anpresskraft durch Anziehen der Schraube 11, kann der Pressabschnitt 10 nach außen federnd nachgeben. Ein zu starkes Verpressen und damit eine Zerstörung der (in Figur 3 nicht dargestellten) Flansche oder etwaiger dazwischen liegender (z.B. elastischer) Dichtungselemente (ebenfalls nicht dargestellt) wird effektiv vermieden.

## Patentansprüche

1. Vorrichtung (1) zum Gegeneinanderpressen von zwei aneinander anliegenden Flanschen (2, 3) einer Flanschverbindung (4) zwischen zwei stirnseitig miteinander verbundenen Luftkanalabschnitten, wobei die Vorrichtung (1) ein im Querschnitt im Wesentlichen U-förmig ausgebildetes Profil (5) mit einem zwei Profilschenkel (6, 7) miteinander verbindenden Steg (8) aufweist, wobei endseitig an jedem Profilschenkel (6, 7) ein Pressabschnitt (9, 10) angeordnet ist, wobei an einem der beiden Pressabschnitte (9) wenigstens eine Schraube (11) angeordnet ist, deren Außengewinde mit einem an diesem Pressabschnitt (9) angeordneten Innengewinde derart zusammenwirkt, dass sie durch eine Drehung um ihre Längsachse (L) in Richtung des anderen Pressabschnitts (10) bewegbar ist,
**dadurch gekennzeichnet, dass** derjenige Profilschenkel (7), dessen Pressabschnitt (10) nicht die Schraube (11) hält, zweifach gekröpft ist, und zwar mit gegensätzlicher Kröpfrichtung, wobei der Pressabschnitt (10) parallel zu dem gegenüberliegenden Pressabschnitt (9), der die Schraube (11) hält, verläuft.

2. Vorrichtung (1) nach Anspruch 1, **dadurch gekennzeichnet, dass** an dem dem anderen Pressabschnitt (10) zugewandten Ende der Schraube (11) ein Presskörper (13) derart angeordnet ist, dass er sich relativ zu der Schraube (11) um deren Längsachse (L) drehen kann.

3. Vorrichtung (1) nach einem der vorhergehenden Ansprüche, **dadurch gekennzeichnet, dass** sie derart ausgebildet ist, dass sie die Flansche (2, 3) in einem mittleren Bereich der Flansche (2, 3) berührt.

4. Luftkanal mit zwei oder mehr über Flanschverbindungen (4) miteinander verbundenen Luftkanalabschnitten, wobei die Flanschverbindungen (4) jeweils zwei aneinander anliegende Flansche (2, 3) aufweisen, und mit wenigstens einer Vorrichtung (1) zum Gegeneinanderpressen der zwei aneinander anliegenden Flansche (2, 3),
**dadurch gekennzeichnet, dass** die Vorrichtung (1) nach einem der Ansprüche 1 bis 3 ausgebildet ist.

5. Luftkanal nach Anspruch 4, **gekennzeichnet durch** wenigstens ein Dichtungselement, das sich in dem Spalt zwischen den aneinander anliegenden Flanschen (2, 3) befindet.

## Claims

1. Device (1) for pressing two flanges (2, 3) of a flange connection (4) against each other which lie next to each other between two air duct sections interlinked on the face with each other, wherein the device (1) having an essentially u-shaped profile (5) in cross-section with a web (8) connecting two profile limbs (6, 7) with each other, wherein on the face of each profile limbs (6, 7) a pressing portion (9, 10) is arranged, wherein at one of the two pressing portions (9) at least one screw (11) is arranged whose male thread interacts with a female thread arranged on the pressing portion (9) in such a way that by a rotation around its longitudinal axis (L) towards the other pressing portion (10) the screw is movable,
**characterized in that** the profile limb (7) whose pressing portion (10) does not hold the screw (11) is cranked twice, namely with opposed cranking direction, wherein the pressing portion (10) runs parallel to the opposite pressing portion (9) which holds the screw (11).

2. Device (1) according to claim 1, **characterized in that** at the end of the screw (11) faced to the other press portion (10) a press compact (13) is arranged in such a way that the press compact (13) is rotatable relative to the screw (11) around the longitudinal axis (L) of the screw.

3. Device (1) according to one of the proceeding claims, **characterized in that** the device (1) is formed in such a way that the device (1) contacts the flanges (2, 3) in a middle range of the flanges (2, 3).

4. Air duct with two or more air duct sections interlinked with each other by flange connections (4), wherein the flange connections (4) respectively having at least two flanges (2, 3) lying next to each other, and with at least one device (1) for pressing the two flanges (2, 3) lying next to each other against each other,
**characterized in that** the device (1) is formed according to one of the claims 1 to 3.

5. Air duct according to claim 4, **characterized by** at least one sealing element arranged in the gap between the flanges (2, 3) lying next to each other.

## Revendications

1. Dispositif (1) permettant de presser l'une contre l'autre deux brides adjacentes (2, 3) d'un raccord à brides (4) entre deux tronçons de conduit d'air reliés l'un à l'autre côté frontal, dans lequel le dispositif (1) présente un profilé (5) de section transversale sensiblement en U présentant une traverse (8) reliant l'une à l'autre deux branches de profilé (6, 7), dans lequel un tronçon de pression (9, 10) est agencé côté extrémité de chaque branche de profilé (6, 7), dans lequel au moins une vis (11) est agencée sur au moins un des deux tronçons de pression (9), présentant un filetage extérieur qui coopère avec un filetage intérieur ménagé dans ledit tronçon de pression (9) de telle manière qu'elle peut être déplacée par une rotation autour de son axe longitudinal (L) en direction de l'autre tronçon de pression (10),
**caractérisé en ce que** la branche de profilé (7) dont le tronçon de pression (10) ne supporte pas la vis (11) est coudé deux fois, et avec des directions de coudage opposées, de sorte que le tronçon de pression (10) s'étend parallèlement au tronçon de pression (9) opposé qui supporte la vis (11).

2. Dispositif (1) selon la revendication 1, **caractérisé en ce qu'**un corps d'appui (13) est disposé sur l'extrémité de la vis (11) dirigée vers le tronçon de pression (10) de telle sorte qu'il peut se déplacer par rapport à la vis (11) en tournant autour de son axe longitudinal (L).

3. Dispositif (1) selon l'une quelconque des revendications précédentes, **caractérisé en ce qu'**il est conçu de telle sorte qu'il est en contact avec les brides (2, 3) dans une zone centrale des brides (2, 3).

4. Conduit d'air ayant deux tronçons de conduit d'air, ou plus, reliés ensemble aux moyens de raccords à brides (4), dans lequel les raccords à brides (4) présentent chacun deux brides (2, 3) adjacentes, et au moins un dispositif permettant de presser l'une contre l'autre les deux brides adjacentes (2, 3),
**caractérisé en ce que** le dispositif (1) est réalisé selon l'une quelconque des revendications 1 à 3.

5. Conduit d'air selon la revendication 4, **caractérisé par** au moins un élément d'étanchéité se trouvant dans l'espace situé entre les brides (2, 3) adjacentes.
